Europäisches Patentamt

European Patent Office

Office européen des brevets

(19)

(11) Numéro de publication : **0 296 970 B1**

(12) **FASCICULE DE BREVET EUROPEEN**

(45) Date de publication du fascicule du brevet :
21.08.91 Bulletin 91/34

(51) Int. Cl.⁵ : **D04H 3/10, D04H 18/00, B29C 67/14**

(21) Numéro de dépôt : **88401570.2**

(22) Date de dépôt : **22.06.88**

(54) **Procédé et matériel d'aiguilletage de mat de verre et produit composite réalisé à partir dudit mat.**

(30) Priorité : **26.06.87 FR 8709064**

(43) Date de publication de la demande :
**28.12.88 Bulletin 88/52**

(45) Mention de la délivrance du brevet :
**21.08.91 Bulletin 91/34**

(84) Etats contractants désignés :
**AT BE CH DE ES FR GB GR IT LI LU NL SE**

(56) Documents cités :
**FR-A- 761 411**
**FR-A- 2 248 937**
**US-A- 4 335 176**

(73) Titulaire : **VETROTEX SAINT-GOBAIN**
**10, place Pierre de Coubertin**
**F-73000 Chambéry (FR)**
**AT BE CH DE ES FR GB GR IT LI LU NL SE**
Titulaire : **INSTITUT TEXTILE DE FRANCE**
**35, rue des Abondances**
**F-92100 Boulogne Billancourt (FR)**
**CH DE FR GB IT LI AT**

(72) Inventeur : **Bolliand, Robert**
**10 résidence du Parc 2, avenue de Veyssières**
**F-69130 Ecully (FR)**

(74) Mandataire : **Breton, Jean-Claude**
**SAINT-GOBAIN RECHERCHE 39, quai Lucien Lefranc**
**F-93300 Aubervilliers Cedex (FR)**

EP 0 296 970 B1

## Description

La présente invention concerne l'aiguilletage de mats de fils de verre continus, destinés à être utilisés comme renforts dans des matériaux composites à base de résines thermoplastiques et, en particulier dans des stratifiés.

L'aiguilletage des mats de fils de verre continus a pour but de donner une bonne cohésion au mat par enchevêtrement des fils de verre et d'augmenter les caractéristiques d'accrochage de la résine thermoplastique sur le mat par modification de l'état de surface dudit mat. Les aiguilles à barbes qui traversent le mat ont une double action : elles sectionnent certains fils continus constitutifs du mat et elles déplacent les fils qui comportent une ou deux extrémités libres. Le déplacement des fils provoque à l'intérieur du mat l'enchevêtrement des fils qui confère au mat sa cohésion et en surface du mat l'apparition d'extrémités libres de fils coupés ou de boucles. On constate que chacune des deux surfaces principales du mat a, après aiguilletage selon le procédé conventionnel, un aspect différent en ce qui concerne la densité d'extrémités libres de fils coupés dépassant de ladite surface et la densité de boucles : la surface principale correspondant à la face du mat par laquelle pénètrent des aiguilles, présente une densité plus faible d'extrémités libres que nous désignerons par le terme floches et une quantité plus grande de boucles que nous désignerons par le terme flottés.

Cette différence d'état de surface entre les deux faces du mat obtenue après un aiguilletage conventionnel, dans lequel toutes les aiguilles ont le même diamètre et la même longueur, entraîne une différence d'accrochage entre le mat et la résine thermoplastique selon que la résine est appliquée sur l'une ou l'autre face du mat. Cette différence est d'autant plus marquée que le mat est formé de fils comprenant un nombre plus élevé de filaments. Les stratifiés réalisés à partir d'une superposition de mats et de résine thermoplastique (ou de feuilles thermoplastiques) peuvent présenter des caractéristiques mécaniques différentes selon la présentation donnée aux mats.

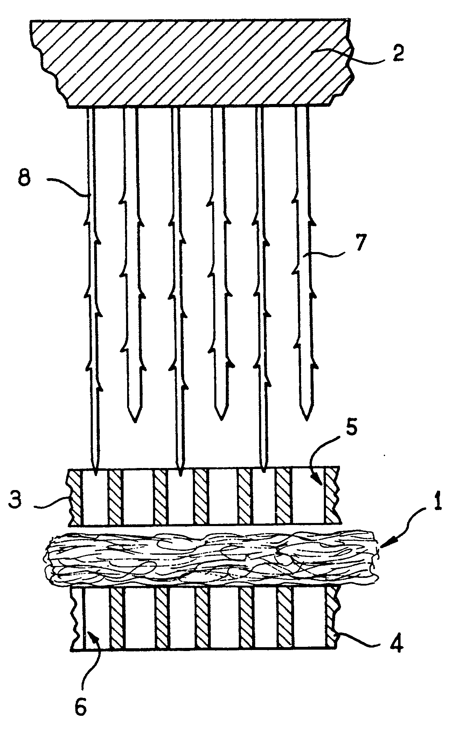

Ainsi, selon l'enseignement du brevet US 4335176, un stratifié réalisé à partir de deux mats de fils de verre, aiguilletés, pris en sandwich entre trois couches de résine thermoplastique présente des caractéristiques mécaniques améliorés lorsque les mats sont disposés de telle sorte que les faces comportant le plus de floches sont tournées toutes deux vers l'extérieur (figure 4 du brevet US 4335176) du stratifié.

Cette disposition particulière nécessite, lors de la fabrication du stratifié, un examen préalable de l'état de surface du mat et une présentation des deux mats en conformité avec l'enseignement dudit brevet. Ceci peut être source d'erreurs, qui ne seront pas immédiatement visibles sur le stratifié lui-même, mais dont les effet se produiront sur les produits finis estampés. De plus, cette disposition particulière n'apporte une solution satisfaisante que pour les stratifiés réalisés à partir de deux mats.

Or on a trouvé, et c'est ce qui fait notamment l'objet de l'invention, un procédé d'aiguilletage de mats de fils de verre continus destinés à être utilisés comme renforts de matériaux composites à base de résine thermoplastique et, en particulier dans des stratifiés, qui pallie l'inconvénient précité. Le procédé de l'invention est du type connu dans lequel le mat est soumis à l'action répétitive d'aiguilles munies de barbes. De manière originale, il consiste à soumettre le mat à l'action, de préférence simultanée, de deux jeux d'aiguilles de diamètres différents.

Le diamètre concerne celui de la partie active de l'aiguille, c'est-à-dire celle qui pénètre dans le mat. La partie active de l'aiguille peut avoir une section droite quelconque, par exemple circulaire ou polygonale. Par diamètre, il faut comprendre celui du cercle par lequel la section droite de la partie active de l'aiguille est circonscrite.

L'invention concerne une planche à aiguilles spécialement conçue pour mettre en oeuvre le procédé d'aiguilletage précité. Cette planche à aiguilles se distingue par le fait qu'elle comporte deux jeux d'aiguilles, munies de barbes, les unes ayant un diamètre compris entre 0,50 et 2,35 mm et les autres un diamètre compris entre 1,10 et 3,56 mm. Chaque jeu est, par exemple, monté sur la planche à raison d'une rangée transversale sur deux.

Préférentiellement, les aiguilles de plus petits diamètres sont plus longues que les aiguilles de plus gros diamètres. Le mat de fils de verre est alors perforé d'abord par les aiguilles de faible diamètre puis par les aiguilles de plus fort diamètre.

Dans un mode privilégié de l'invention, les rangées d'aiguilles de gros diamètre sont de jauge 13 pour des aiguilles ayant un fut de diamètre de 2,35 mm et de longueur de 76,2 mm et les rangées d'aiguilles de petits diamètres sont de jauge 15 pour des aiguilles ayant un fût de diamètre de 1,83 mm et de longueur de 88,9 mm.

L'invention concerne aussi une feuille de résine thermoplastique renforcée par des fibres de verre se présentant sous la forme d'au moins deux mats de fils continus, aiguilletés, chaque mat comportant des perforations de dimensions différentes.

De façon tout à fait inattendue, le mat de fils continus de verre aiguilleté selon le procédé de l'invention

EP 0 296 970 B1

est facilement imprégné par une résine thermoplastique à partir de ses deux faces.

On peut tenter d'expliquer cette aptitude à l'imprégnation en faisant les suppositions suivantes. Les aiguilles de plus gros diamètres, lorsqu'elles pénètrent dans le mat, créent une densification momentanée du mat en repoussant les fils qu'elles rencontrent. Cette densification permet aux barbes des aiguilles de plus petits diamètres pénétrant dans ces zones plus denses en nombre de fils d'entraîner des fils préalablement coupés par les aiguilles de plus gros diamètres et de créer des floches. La présence à la fois des alvéoles dues à la perforation du mat par les aiguilles de plus gros diamètres et des floches étirés par les aiguilles de plus petits diamètres, améliore la pénétration et l'accrochage de la résine thermoplastique avec le mat.

L'invention sera mieux comprise à la lecture de la description qui va être faite d'un mode privilégié de réalisation d'un mat de fils continus de verre, aiguilleté à l'aide d'une planche à deux jeux d'aiguilles et du dessin annexé dans lequel la figure unique montre une vue partielle, en coupe, d'une planche à deux jeux d'aiguilles au-dessus d'un mat en cours d'aiguilletage. Cette description est donnée à titre d'exemple non limitatif.

Le mat 1 de fils continus de verre a été formé, à partir d'au moins deux fils continus répartis transversalement sur un convoyeur en déplacement, de manière connue et non décrite ici. Chaque fil comprend 50 filaments présentant un diamètre de 17 µm. Le grammage du mat obtenu est de 450 g/m².

La machine à aiguilleter est une machine classique, non représentée sur la figure, qui comporte une poutre animée, grâce à un système de bielle et d'excentrique, d'un mouvement de monte et baisse ; sur la poutre est fixée la planche à aiguilles 2. Le mat passe entre deux plaques perforées, la plaque supérieure 3 ou détacheur et la plaque de fond 4 ou enclume. Les aiguilles passent à travers les trous 5 pratiqués dans le détacheur, pénètrent dans le mat et le traversent jusqu'à descendre dans les trous 6 pratiqués dans l'enclume.

Sur la planche à aiguilles 2 sont montées 50 rangées d'aiguilles, alternativement des aiguilles 7 et des aiguilles 8. Les aiguilles 7 ont un fût de diamètre de 2,35 mm et de longueur de 76,2 mm. Les aiguilles 8 ont un fût de diamètre de 1,83 mm et de longueur de 88,9 mm. La partie active de ces aiguilles a une section droite triangulaire. Chaque aiguille comporte 9 barbes disposées régulièrement sur toute la hauteur de l'aiguille, à raison de 3 barbes par arête.

Les rangées correspondant aux aiguilles 7 ont une jauge de 13, alors que les rangées correspondant aux aiguilles 8 ont une jauge de 15.

L'aiguilletage du mat 1, à l'aide de la planche à aiguilles 2, a été réalisé dans les conditions opératoires suivantes :

```
- vitesse d'avance du mat              :    1,20 m/min
- vitesse de frappe                    :  150 coups/min
- pénétration                          :   26 mm
- nombre d'aiguilles au mètre linéaire : 2500
- nombre de coups au cm²               :   10,6
```

Les mats aiguilletés selon la présente invention peuvent être utilisés pour le renforcement de nombreuses résines thermoplastiques telles que les résines vinyliques ou acryliques.

Ainsi, on réalise un stratifié en mettant en oeuvre deux mats aiguilletés comme décrit ci-dessus, entre lesquels est extrudée une résine thermoplastique et qui sont, eux-mêmes, compris entre deux feuilles thermoplastiques. Le stratifié est obtenu en appliquant sur l'ensemble ainsi constitué une pression, alors que la température est suffisamment élevée pour assurer la fusion progressive des feuilles thermoplastiques. Le dispositif permettant de fabriquer un tel stratifié est décrit, par exemple, dans le brevet US 4277531 (figure 5).

Des essais comparatifs ont été menés à partir de deux stratifiés réalisés dans les mêmes conditions à partir des mêmes mats, de la même résine et des mêmes feuilles thermoplastiques, mais dans l'un des stratifiés les deux mats avaient leurs faces plus denses en floches tournées vers l'extérieur conformément à l'enseignement du brevet US 4335176 et, dans l'autre, les deux mats avaient une face plus dense en floches tournée vers une face moins dense en floches. Les deux stratifiés ont été estampés dans les mêmes conditions et on n'a relevé aucune différence de comportement à l'estampage ni entre les caractéristiques des produits finis estampés.

Le mat aiguilleté selon l'invention, associé à des feuilles de résines thermoplastiques, permet de fabriquer des articles renforcés présentant d'excellentes propriétés mécaniques comme, par exemple, les pièces pour automobiles fabriquées par emboutissage.

Diverses modifications peuvent être apportées à la présente invention sans pour autant sortir de son cadre.

**Revendications**

1. Procédé d'aiguilletage de mat de filaments continus de verre destiné à être utilisé comme renfort dans des matériaux composites à base de résines, du type dans lequel le mat est soumis à l'action répétitive d'aiguilles munies de barbes, caractérisé en ce qu'il consiste à soumettre le mat (1) à l'action de deux jeux d'aiguilles (7, 8) de diamètres différents.

2. Procédé selon la revendication 1, caractérisé en ce qu'on soumet le mat (1) à l'action simultanée des deux jeux d'aiguilles (7, 8).

3. Procédé selon l'une des revendications 1, caractérisé en ce que le mat (1) est perforé d'abord par les aiguilles (8) de faible diamètre puis par les aiguilles (7) de plus fort diamètre.

4. Procédé selon l'une des revendications précédentes, caractérisé en ce qu'on engendre dans le mat (1) des perforations de dimensions différentes régulièrement réparties en alternance.

5. Planche à aiguilles (2) pour la mise en oeuvre du procédé selon la revendication 1, caractérisée en ce qu'elle comporte deux jeux d'aiguilles (7, 8) munies de barbes, les unes (8) ayant un diamètre compris entre 0,50 et 2,35 mm et les autres (7) un diamètre compris entre 1,10 et 3,56 mm.

6. Planche à aiguilles selon la revendication 5, caractérisée en ce que chaque jeu d'aiguilles est monté sur la planche (2) à raison d'une rangée transversale sur deux.

7. Planche à aiguilles selon l'une des revendications 5 et 6, caractérisée en ce que les aiguilles de plus petits diamètres (8) sont plus longues que les aiguilles (7) de plus gros diamètres.

8. Planche à aiguilles selon la revendication 6, caractérisée en ce que les rangées d'aiguilles (7), de gros diamètre, sont de jauge 13 pour des aiguilles ayant un fût de diamètre de 2,35 mm et de longueur de 76,2 mm et les rangées d'aiguilles (8), de petits diamètres, sont de jauge 15 pour des aiguilles ayant un fût de diamètre de 1,83 mm et de longueur de 88,9 mm.

9. Feuille de résine thermoplastique renforcée par des fibres de verre se présentant sous la forme d'au moins deux couches de mat de fils continus aiguilleté selon un moyen défini par l'une quelconque des revendications précédentes, caractérisée en ce que chaque couche de mat comporte au moins deux types de perforations de dimensions différentes.


**Patentansprüche**

1. Verfahren zum Steppen einer Matte aus Endlos-Glasfasern, die als Verstärkung in Verbundwerkstoffen auf Harzbasis verwendet wird, bei welchem die Matte der wiederholten Wirkung von mit Haken versehenen Nadeln ausgesetzt ist, **dadurch gekennzeichnet**, daß die Matte (1) der Wirkung von zwei Nadelgruppen (7, 8) mit unterschiedlichen Durchmessern ausgesetzt wird.

2. Verfahren nach Anspruch 1, **dadurch gekennzeichnet**, daß die Matte (1) der gleichzeitigen Wirkung der beiden Nadelgruppen (7, 8) ausgesetzt wird.

3. Verfahren nach Anspruch 1, **dadurch gekennzeichnet**, daß die Matte (1) zunächst von den Nadeln (8) mit geringem Durchmesser und anschließend von den Nadeln (7) mit größerem Durchmesser durchbohrt wird.

4. Verfahren nach einem der vorhergehenden Ansprüche, **dadurch gekennzeichnet**, daß in der Matte (1) Lochungen verschiedener Größe erzeugt werden, die gleichmäßig alternierend verteilt sind.

5. Nadelplatte (2) zur Durchführung des Verfahrens nach Anspruch 1, **dadurch gekennzeichnet**, daß diese zwei Gruppen von mit Haken versehenen Nadeln (7, 8) umfaßt, wobei eine Gruppe (8) einen Durchmesser zwischen 0,50 und 2,35 mm und die andere Gruppe (7) einen Durchmesser zwischen 1,10 und 3,56 mm aufweist.

6. Nadelplatte nach Anspruch 5, **dadurch gekennzeichnet**, daß Jede Nadelgruppe im Verhältnis von einer Querreihe von zweien an der Platte (2) befestigt ist.

7. Nadelplatte nach einem der Ansprüche 5 und 6, **dadurch gekennzeichnet**, daß die Nadeln mit kleinerem Durchmesser (8) länger sind als die Nadeln (7) mit größerem Durchmesser.

8. Nadelplatte nach Anspruch 6, **dadurch gekennzeichnet**, daß die Reihen der Nadeln (7) mit großem Durchmesser die Feinheitsnummer 13 aufweisen bezüglich der Nadeln, deren Schaft einen Durchmesser von 2,35 mm und eine Länge von 76,2 mm besitzt, und daß die Reihen der Nadeln (8) mit kleinem Durchmesser die Feinheitsnummer 15 aufweisen bezüglich der Nadeln, deren Schaft einen Durchmesser von 1,83 mm und eine Länge von 88,9 mm besitzt.

9. Platte aus thermoplastischem Kunststoff, die mit Glasfasern in Form von mindestens zwei Schichten einer Endlosfasermatte verstärkt ist, welche nach einem Verfahren nach einem der vorhergehenden Ansprüche gesteppt ist, **dadurch gekennzeichnet**, daß jede Mattenschicht mindestens zwei Lochungsarten verschiedener Größe aufweist.

## Claims

1. Process for tufting a mat of continuous glass filaments envisaged for use as reinforcement in composite materials based on resins, of the type in which the mat is subjected to the repeated action of barbed needles, characterised in that it consists of subjecting the mat (1) to the action of two sets of needles (7, 8) of different diameters.

2. Process according to claim 1, characterised in that the mat (1) is subjected to the simultaneous action of two sets of needles (7, 8).

3. Process according to claim 1, characterised in that the mat (1) is first perforated with the needles (8) of small diameter and then with the needles (7) of larger diameter.

4. Process according to one of the preceding claims, characterised in that perforations of different dimensions evenly distributed are produced in an alternating fashion in the mat (1).

5. Board of needles (2) for carrying out the process according to claim 1, characterised in that it comprises two sets of needles (7, 8) equipped with barbs, the needles (8) of one set having a diameter in the range of from 0.50 to 2.35 mm and the others (7) having a diameter of from 1.10 to 3.56 mm.

6. Board of needles according to claim 5, characterised in that each set of needles is mounted on the board (2) in every second transverse row.

7. Board of needles according to one of the claims 5 and 6, characterised in that the needles (8) of smaller diameter are longer than the needles (7) of larger diameter.

8. Board of needles according to claim 6, characterised in that the rows of needles (7) of larger diameter are of gauge 13 for needles having a shank with a diameter of 2.35 mm and a length of 76.2 mm and the rows of needles (8) of smaller diameter are of gauge 15 for needles having a shank with a diameter of 1.83 mm and a length of 88.9 mm.

9. Sheet of thermoplastic resin reinforced with glass fibres in the form of at least two layers of a mat of continuous threads tufted by means defined by any one of the preceding claims, characterised in that each layer of mat has at least two types of perforations of different dimensions.

5